# EUROPÄISCHE PATENTSCHRIFT

(11) **EP 3 934 932 B1**
(45) Veröffentlichungstag und Bekanntmachung des Hinweises auf die Patenterteilung: **01.03.2023**
(21) Anmeldenummer: 20711803.5
(22) Anmeldetag: 03.03.2020
(51) Int. Cl.: B60N 2/06, B60N 2/07, B60N 2/02

(54) **LÄNGSEINSTELLVORRICHTUNG ZUR MOTORISCHEN LÄNGSEINSTELLUNG EINES FAHRZEUGSITZES SOWIE FAHRZEUGSITZ**
LONGITUDINAL ADJUSTING DEVICE FOR THE MOTORIZED LONGITUDINAL ADJUSTMENT OF A VEHICLE SEAT, AND VEHICLE SEAT
DISPOSITIF DE RÉGLAGE LONGITUDINAL POUR EFFECTUER LE RÉGLAGE LONGITUDINAL D'UN SIÈGE DE VÉHICULE PAR MOTEUR ET SIÈGE DE VÉHICULE

(30) Priorität: 04.03.2019 DE 102019105454
(43) Veröffentlichungstag der Anmeldung: 12.01.2022
(73) Patentinhaber: Adient US LLC, Plymouth, MI 48170 (US)
(72) Erfinder: FLICK, Joachim, 42499 Hückeswagen (DE)
(74) Vertreter: Liedtke & Partner Patentanwälte
(86) Internationale Anmeldenummer: PCT/EP2020/055499
(87) Internationale Veröffentlichungsnummer: WO 2020/178264

(56) Entgegenhaltungen:
- DE-A1- 10 139 631
- DE-A1-102006 011 717
- US-A1- 2018 065 507

## Beschreibung

Die Erfindung betrifft eine Längseinstellvorrichtung zur motorischen Längseinstellung eines Fahrzeugsitzes, insbesondere eines Kraftfahrzeugsitzes, mit einer ersten Schiene, einer relativ zur ersten Schiene verschiebbaren zweiten Schiene, wobei zwischen der ersten Schiene und der zweiten Schiene ein Innenkanal gebildet ist, einem Spindelgetriebe und einer zur Längseinstellung mit dem Spindelgetriebe zusammenwirkenden Spindel, wobei das Spindelgetriebe, mittels einer Halterung zur Aufnahme des Spindelgetriebes, wenigstens teilweise in dem Innenkanal relativ zur ersten Schiene fixiert gehalten ist und die Spindel relativ zur zweiten Schiene fixiert ist, wobei seitlich abstehende Vorsprünge der jeweils in Längsrichtung der ersten Schiene vor und hinter dem Spindelgetriebe angeordneten Halteschenkel der Halterung durch seitliche Öffnungen der ersten Schiene greifen. Die Erfindung betrifft ferner einen Fahrzeugsitz.

### Stand der Technik

Aus der DE 101 39 631 A1 ist eine gattungsgemäße Längseinstellvorrichtung für einen Fahrzeugsitz zur motorischen Längseinstellung des Fahrzeugsitzes bekannt, mit einer ersten Sitzschiene, einer relativ zur ersten Sitzschiene verschiebbaren zweiten Sitzschiene, einem ersten Getriebeelement der ersten Sitzschiene und einem mit dem ersten Getriebeelement zur Längseinstellung zusammenwirkenden zweiten Getriebeelement, welches in einem schienenfesten Gehäuse der zweiten Sitzschiene gelagert ist, wobei die zweite Sitzschiene einen Teil des Gehäuses bildet und ein weiterer Teil des Gehäuses durch jeweils in Längsrichtung der Sitzschienen vor und hinter dem zweiten Getriebeelement angeordnete Lagerplatten gebildet wird, wobei die seitlichen Ränder der Lagerplatten durch seitliche Öffnungen der zweiten Sitzschiene greifen und mit dieser stoffschlüssig verbunden sind.

Des Weiteren ist eine gattungsgemäße Längseinstellvorrichtung für einen Fahrzeugsitz aus der DE 10 2006 011 717 A1 bekannt.

### Aufgabe

Der Erfindung liegt die Aufgabe zu Grunde, eine Längseinstellvorrichtung eingangs genannter Art zu verbessern, insbesondere eine einfache Montage zu gewährleisten und die Entstehung von Störgeräuschen während einer Verwendung der Längseinstellvorrichtung zu vermeiden, sowie einen entsprechenden Fahrzeugsitz bereitzustellen.

### Lösung

Diese Aufgabe wird erfindungsgemäß gelöst, durch eine Längseinstellvorrichtung zur motorischen Längseinstellung eines Fahrzeugsitzes, insbesondere eines Kraftfahrzeugsitzes, mit einer ersten Schiene, einer relativ zur ersten Schiene verschiebbaren zweiten Schiene, wobei zwischen der ersten Schiene und der zweiten Schiene ein Innenkanal gebildet ist, einem Spindelgetriebe und einer zur Längseinstellung mit dem Spindelgetriebe zusammenwirkenden Spindel, wobei das Spindelgetriebe, mittels einer Halterung zur Aufnahme des Spindelgetriebes, wenigstens teilweise in dem Innenkanal relativ zur ersten Schiene fixiert gehalten ist und die Spindel relativ zur zweiten Schiene fixiert ist, wobei seitlich abstehende Vorsprünge der jeweils in Längsrichtung der ersten Schiene vor und hinter dem Spindelgetriebe angeordneten Halteschenkel der Halterung durch seitliche Öffnungen der ersten Schiene greifen, wobei im Bereich der seitlichen Öffnungen jeweils ein Anlagemittel mit einem Kontaktabschnitt angeordnet ist, wobei der Kontaktabschnitt den in der jeweiligen Öffnung angeordneten Halteschenkel kontaktiert.

Dadurch, dass im Bereich der seitlichen Öffnungen jeweils ein Anlagemittel mit einem Kontaktabschnitt angeordnet ist, wobei der Kontaktabschnitt den in der jeweiligen Öffnung angeordneten Halteschenkel kontaktiert, kann die in Längsrichtung belastete Kontaktfläche zwischen der ersten Schiene und den Halteschenkeln reduziert und mittels der bei geringen Querbewegungen der Halteschenkel relativ zu der ersten Schiene durch eine elastische Verformbarkeit der Anlagemittel abgefangen werden. Dadurch dass sich die Anlagemittel bei den geringen Querbewegungen verformen, entsteht keine Reibung zwischen den Anlagemitteln und den Halteschenkeln, durch die, unerwünschte Geräusche entstehen könnten.

Das Anlagemittel kann einstückig mit der ersten Schiene gebildet sein. Das Anlagemittel kann aus dem Material der Schiene freigeschnitten oder freigestanzt sein. Das Anlagemittel kann in Form einer Lasche ausgestaltet sein. Das Anlagemittel kann aus der ersten Schiene ausgestellt sein. Eine Nachgiebigkeit des Anlagemittels in einer Querrichtung kann höhere sein als eine Nachgiebigkeit des Anlagemittels in Längsrichtung. Eine Steifigkeit des Anlagemittels in Längsrichtung kann höher sein als eine Steifigkeit des Anlagemittels in Querrichtung.

Die Halterung kann als ein U-förmiger Haltebügel mit zwei parallelen Halteschenkeln ausgebildet sein. Jeweils ein freies Ende der Halteschenkel kann nach unten gerichtet sein.

Die Vorsprünge können stufenförmig ausgebildet sein. Eine Form der jeweiligen Vorsprünge kann mit seitlichen Öffnungen in einander gegenüber liegenden Seitenwänden der ersten Sitzschiene korrespondieren.

Bis auf den Kontakt des Halteschenkels mit dem Kontaktabschnitt des Anlagemittels in Längsrichtung, kann beiderseits der Halteschenkel ein Spalt vorgesehen sein. Bis auf den Kontakt des Halteschenkels mit dem Kontaktabschnitt des Anlagemittels in Längsrichtung, kann beiderseits der Halteschenkel ein die Vorsprünge umlaufender Spalt vorgesehen sein.

Die Kontaktabschnitte der beiden Anlagemittel einer jeden Seitenwand der ersten Schiene können aufeinander zu orientiert sein.

Diese Aufgabe wird ferner erfindungsgemäß gelöst, durch einen Fahrzeugsitz, insbesondere ein Kraftfahrzeugsitz, aufweisend ein Sitzteil und eine mit dem Sitzteil verbundene Längseinstellvorrichtung zur motorischen Längseinstellung des Fahrzeugsitzes gemäß vorstehender Beschreibung.

Mit anderen Worten ausgedrückt, wird in einer ersten Schiene einer Längseinstellvorrichtung eine Schnittstelle zu einer Halterung derart ausgeführt, dass eine unmittelbare Abstützung in Längsrichtung der ersten Schiene über eine freigeschnittene Lasche erfolgt. Diese kann die geringen auftretenden Querbewegungen im Oberschienenprofil über elastische Verformung und über Biegung aufnehmen. Bei nach dem Stand der Technik bekannten Vorrichtungen entstehende Geräusche, insbesondere durch Reibung unter Kontakt entstehende störende Geräusche, werden hierbei in vorteilhafter Weise vermieden. Durch eine direkte Anlage in Längsrichtung der Halterung zur ersten Schiene sind ferner auftretende Toleranzen für den Bauraum eine Spindelgetriebes reduzierbar.

Im unteren Bereich der Halterung wird durch einen größeren Spalt sichergestellt, dass dort im normalen Einsatz kein Kontakt in Längsrichtung entsteht. Lediglich im Fall einer überhöhten Last, zum Beispiel eines Unfalls, tritt ein Kontakt zwischen dem unteren Ende der Halterung und der ersten Schiene nach Verformung der Laschen auf, um die auftretenden hohen Lasten übertragen zu können.

Die Halterung ist insbesondere an der Oberfläche der ersten Schiene befestigt, bevorzugt verschweißt.

### Figuren und Ausführungsformen der Erfindung

Im Folgenden ist die Erfindung anhand eines in den Figuren dargestellten vorteilhaften Ausführungsbeispiels näher erläutert. Die Erfindung ist jedoch nicht auf dieses Ausführungsbeispiel beschränkt. Es zeigen:
- Fig. 1:: eine schematische Seitenansicht eines erfindungsgemäßen Fahrzeugsitzes,
- Fig. 2:: eine perspektivische Ansicht einer erfindungsgemäßen Längseinstellvorrichtung,
- Fig. 3:: eine perspektivische Ansicht auf innerhalb eines Innenkanals der Längseinstellvorrichtung gemäß Fig. 2 angeordnete Bauteile,
- Fig. 4:: ausschnittsweise einen Längsschnitt der Längseinstellvorrichtung entlang der Linie A-A in Fig. 2,
- Fig. 5:: eine perspektivische Ansicht der Längseinstellvorrichtung gemäß Fig. 2 von schräg unten im Bereich des Spindelgetriebes, wobei eine zweite Schiene nicht dargestellt ist,
- Fig. 6:: ausschnittsweise einen Längsschnitt der ersten Schiene und einer Halterung entlang der Linie A-A in Fig. 2, und
- Fig. 7:: eine perspektivische Ansicht auf die Halterung in einer geschnitten dargestellten ersten Schiene.

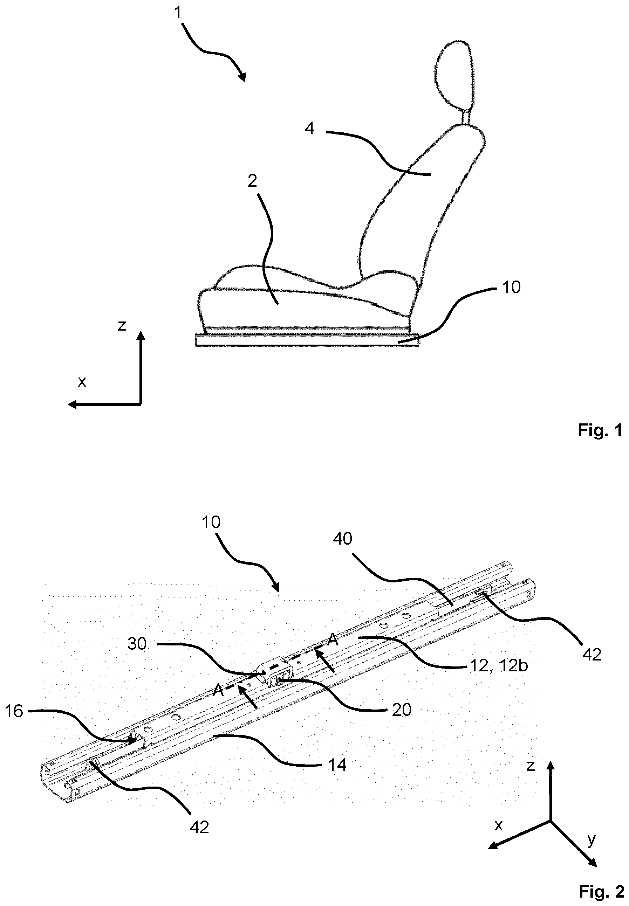

Ein in Figur 1 schematisch dargestellter erfindungsgemäßer Fahrzeugsitz 1 wird nachfolgend unter Verwendung von drei senkrecht zueinander verlaufenden Raumrichtungen beschrieben. Eine Längsrichtung x verläuft bei einem im Fahrzeug eingebauten Fahrzeugsitz 1 weitgehend horizontal und vorzugsweise parallel zu einer Fahrzeuglängsrichtung, die der gewöhnlichen Fahrtrichtung des Fahrzeuges entspricht. Eine zu der Längsrichtung x senkrecht verlaufende Querrichtung y ist im Fahrzeug ebenfalls horizontal ausgerichtet und verläuft parallel zu einer Fahrzeugquerrichtung. Eine Vertikalrichtung z verläuft senkrecht zu der Längsrichtung x und senkrecht zu der Querrichtung y. Bei einem im Fahrzeug eingebauten Fahrzeugsitz 1 verläuft die Vertikalrichtung z parallel zu der Fahrzeughochachse.

Die verwendeten Positions- und Richtungsangaben, wie beispielsweise vorne, hinten, oben und unten beziehen sich auf eine Blickrichtung eines im Fahrzeugsitz 1 sitzenden Insassen in normaler Sitzposition, wobei der Fahrzeugsitz 1 im Fahrzeug eingebaut, in einer zur Personenbeförderung geeigneten Gebrauchsposition und wie üblich in Fahrtrichtung ausgerichtet ist. Der erfindungsgemäße Fahrzeugsitz 1 kann jedoch auch in abweichender Ausrichtung, beispielsweise quer zur Fahrtrichtung verbaut werden.

Der Fahrzeugsitz 1 für ein Kraftfahrzeug weist ein Sitzteil 2 und eine relativ zum Sitzteil 2 in ihrer Neigung einstellbare Lehne 4 auf. Eine Neigung der Lehne 4 kann beispielsweise mittels eines Rastbeschlages oder eines Getriebebeschlages einstellbar sein. Der Fahrzeugsitz 1 ist zur Einstellung einer Sitzlängsposition auf einer Längseinstellvorrichtung 10 montiert.

Fig. 2 zeigt die erfindungsgemäße Längseinstellvorrichtung 10 des Fahrzeugsitzes 1. Die Längseinstellvorrichtung 10 weist wenigstens ein Schienenpaar, bevorzugt zwei Schienenpaare, auf. Die Schienenpaare sind jeweils aus einer ersten Schiene 12, insbesondere zur Verbindung mit einer Sitzstruktur, und einer zweiten Schiene 14, insbesondere zur Verbindung mit einer Fahrzeugstruktur, gebildet. Die Schienen 12, 14 des Schienenpaares sind in Längsrichtung x relativ zueinander verschiebbar und umgreifen unter Bildung eines Innenkanals 16 einander wechselseitig.

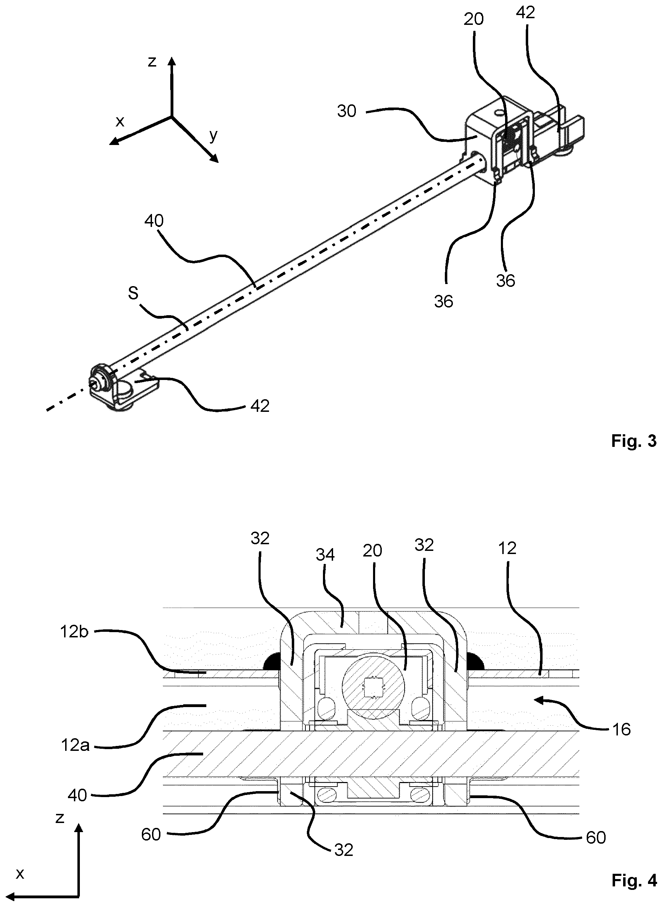

Fig. 3 zeigt eine perspektivische Ansicht auf innerhalb des Innenkanals 16 der Längseinstellvorrichtung 10 angeordnete Bauteile. In dem Innenkanal 16 ist ein an der ersten Schiene 12 gelagertes Spindelgetriebe 20 und eine mit dem Spindelgetriebe 20 wirkverbundene Spindel 40 angeordnet. Die Spindel 40 erstreckt sich entlang einer Spindelachse S parallel zur Längsrichtung x. Die Spindel 40 ist an ihren jeweiligen Enden mittels zweier Spindelhaltern 42 drehfest gehalten und relativ zur zweiten Schiene 14 fixiert.

An einem zentralen Abschnitt der ersten Schiene 12 ist ein mittels eines nicht dargestellten Motors antreibbares und mit der Spindel 40 zusammenwirkendes Spindelgetriebe 20 angeordnet. Der Motor kann auf einem zwischen zwei Spindelgetrieben 20 zweier parallel angeordneter Schienenpaare der Längseinstellvorrichtung 10 montierten Motorträger gehalten sein und mittels einer ebenfalls nicht dargestellten Welle die beiden Getriebe 20 antreiben. Bezüglich der Funktionsweise des Getriebes wird auf die DE 10 2016 225 835 A1 verwiesen, deren diesbezüglicher Offenbarungsgehalt ausdrücklich einbezogen wird.

Fig. 4 zeigt einen Längsschnitt der Längseinstellvorrichtung 10 entlang der Linie A-A in Fig. 2, insbesondere im Bereich des Spindelgetriebes 20. Ein Gehäuse des Spindelgetriebes 20 weist insbesondere an eine Halterung 30 angepasste Abmessungen und/oder eine angepasste Form auf.

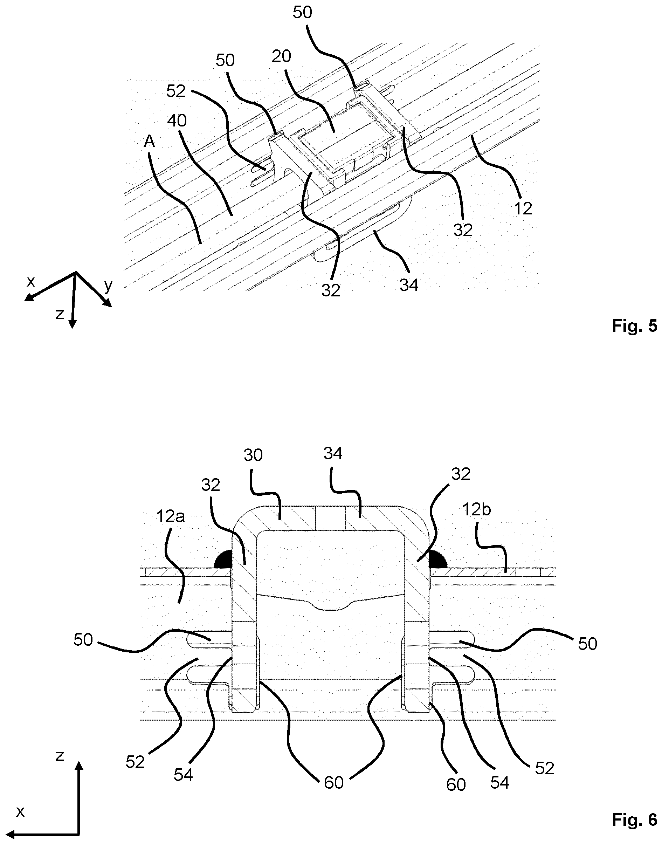

Fig. 5 zeigt eine perspektivische Ansicht der Längseinstellvorrichtung 10 gemäß Fig. 2 von schräg unten, wobei die zweite Schiene 14 nicht dargestellt ist.

Fig. 6 zeigt eine Ansicht eines Längsschnittes der ersten Schiene 12 und der Halterung 30. Die Halterung 30 ist als ein Profilelement, insbesondere als ein U-förmiger Haltebügel, ausgebildet. Die Halterung 30 umfasst zwei Halteschenkel 32, die mittels eines Verbindungsabschnitts 34 miteinander verbunden sind. Die Halterung 30 ist einstückig ausgebildet und beispielsweise ein Formteil. An den unteren Eckbereichen der Halteschenkel 32 stehen parallel zur Querrichtung y nach außen Vorsprünge 36 ab.

Im dargestellten Ausführungsbeispiel umfasst jeder Halteschenkel 32 an jedem seiner in Querrichtung y gegenüberliegenden unteren Eckbereiche einen Vorsprung 36. Eine Form der jeweiligen Vorsprünge 36 korrespondiert mit seitlichen Öffnungen 50 in einander gegenüberliegenden Seitenwänden 12a der ersten Sitzschiene 12. Dabei sind die Vorsprünge 36 eingerichtet, um in die Öffnungen 50 form- und/oder kraftschlüssig einzugreifen. Bevorzugt können die Vorsprünge 36 in die Öffnungen 50 einrasten. Die Halterung 30 ragt mit den Halteschenkeln 32 durch eine Ausnehmung in einem die beiden Seitenwände 12a der ersten Schiene 12 verbindenden oberen Abschnitt 12b hindurch, so dass der Verbindungsabschnitt 34 der Halterung 30 außerhalb, insbesondere oberhalb, des Innenkanals 16 angeordnet ist. Die Halterung 30 ist im Bereich der Ausnehmung mit dem oberen Abschnitt 12b stoffschlüssig verbunden, insbesondere verschweißt oder verklebt.

Die seitlichen Öffnungen 50 sind in einem in Längsrichtung x nach vorne oder hinten orientierten Umfangsabschnitt derart eingeschnitten, dass jeweils ein Anlagemittel 52, insbesondere in Form einer freigeschnittenen Lasche, entsteht. Die Öffnungen 50 weisen vorliegend einen F-förmigen oder entsprechend einen vertikal gespiegelten F-förmigen Verlauf auf. Das Anlagemittel 52 kontaktiert mit einem Kontaktabschnitt 54 den in der jeweiligen Öffnung 50 angeordneten Halteschenkel 32.

Das Anlagemittel 52 ist derart ausgestaltet, dass es mit seinem Kontaktabschnitt 54 bis in einen Bereich der Öffnung 50 hineinragt, insbesondere in die Öffnung 50 hineinragt oder die Öffnung 50 überragt, und den jeweiligen kontaktierten Halteschenkel 32 unter Bildung eines Spaltes 60 von einem Randabschnitt der Öffnung 50 beabstandet hält. Bis auf den Kontakt des Halteschenkels 32 mit dem Kontaktabschnitt 54 des Anlagemittels 52 ist in Längsrichtung x beiderseits der Halteschenkel 32 ein Spalt 60, insbesondere ein die Vorsprünge 36 umlaufender Spalt 60, vorgesehen. Die Kontaktabschnitte 54 der beiden Anlagemittel 52 einer jeden Seitenwand 12a der ersten Schiene 12 sind bevorzugt aufeinander zu orientiert. Auf diese Weise können die Halteschenkel 32 eine geringfügige Vorspannung in Richtung der Anlagemittel 52 aufweisen und sind beiderseits an den Kontaktabschnitten 54 abgestützt.

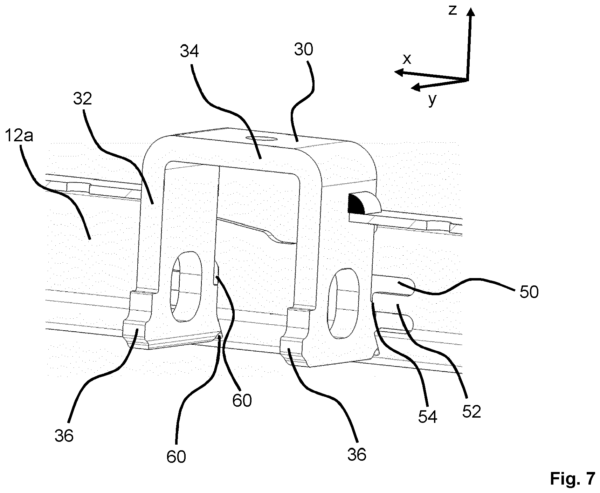

Fig. 7 zeigt eine perspektivische Ansicht auf die Halterung 30 in einer geschnitten dargestellten ersten Schiene 12. Die Vorsprünge 36 sind jeweils in einem unteren Bereich der Halteschenkel 32 angeordnet. Weiterhin sind die Vorsprünge 36 jeweils stufenförmig ausgebildet und ragen parallel zur Querrichtung y ab.

Die in der vorstehenden Beschreibung, den Ansprüchen und den Zeichnungen offenbarten Merkmale können sowohl einzeln als auch in Kombination für die Verwirklichung der Erfindung in ihren verschiedenen Ausgestaltungen von Bedeutung sein.

Obwohl die Erfindung in den Zeichnungen und der vorausgegangenen Darstellung im Detail beschrieben wurde, sind die Darstellungen illustrativ und beispielhaft und nicht einschränkend zu verstehen. Insbesondere ist die Wahl der zeichnerisch dargestellten Proportionen der einzelnen Elemente nicht als erforderlich oder beschränkend auszulegen. Weiterhin ist die Erfindung insbesondere nicht auf die erläuterten Ausführungsbeispiele beschränkt. Weitere Varianten der Erfindung und ihre Ausführung ergeben sich für den Fachmann aus der vorangegangenen Offenbarung, den Figuren und den Ansprüchen, soweit der von den Ansprüchen definierte Schutzbereich nicht verlassen wird.

In den Ansprüchen verwendete Begriffe wie "umfassen", "aufweisen", "beinhalten", "enthalten" und dergleichen schließen weitere Elemente oder Schritte nicht aus. Die Verwendung des unbestimmten Artikels schließt eine Mehrzahl nicht aus. Eine einzelne Einrichtung kann die Funktionen mehrerer in den Ansprüchen genannten Einheiten bzw. Einrichtungen ausführen.

### Bezugszeichenliste

- 1: Fahrzeugsitz
- 2: Sitzteil
- 4: Lehne
- 10: Längseinstellvorrichtung
- 12: erste Schiene
- 12a: Seitenwand
- 12b: oberer Abschnitt
- 14: zweite Schiene
- 16: Innenkanal
- 20: Spindelgetriebe
- 30: Halterung
- 32: Halteschenkel
- 34: Verbindungsabschnitt
- 36: Vorsprung
- 40: Spindel
- 42: Spindelhalter
- 50: Öffnung
- 52: Anlagemittel
- 54: Kontaktabschnitt
- 60: Spalt
- S: Spindelachse
- x: Längsrichtung
- y: Querrichtung
- z: Vertikalrichtung

## Patentansprüche

1. Längseinstellvorrichtung (10) zur motorischen Längseinstellung eines Fahrzeugsitzes (1), insbesondere eines Kraftfahrzeugsitzes, mit einer ersten Schiene (12), einer relativ zur ersten Schiene (12) verschiebbaren zweiten Schiene (14), wobei zwischen der ersten Schiene (12) und der zweiten Schiene (14) ein Innenkanal (16) gebildet ist, einem Spindelgetriebe (20) und einer zur Längseinstellung mit dem Spindelgetriebe (20) zusammenwirkenden Spindel (40), wobei das Spindelgetriebe (20), mittels einer Halterung (30) zur Aufnahme des Spindelgetriebes (20), wenigstens teilweise in dem Innenkanal (16) relativ zur ersten Schiene (12) fixiert gehalten ist und die Spindel (40) relativ zur zweiten Schiene (14) fixiert ist, wobei seitlich abstehende Vorsprünge (36) der jeweils in Längsrichtung (x) vor und hinter dem Spindelgetriebe (20) angeordneten Halteschenkel (32) der Halterung (30) durch seitliche Öffnungen (50) der ersten Schiene (12) greifen,
**dadurch gekennzeichnet, dass**
im Bereich der seitlichen Öffnungen (50) jeweils ein Anlagemittel (52) mit einem Kontaktabschnitt (54) angeordnet ist, dass das Anlagemittel (52) der ausgestaltet ist, dass es mit seinem Kontaktabschnitt (54) bis in einen Bereich der Öffnung (50) hineinragt, insbesondere in die Öffnung (50) hineinragt oder die Öffnung (50) überragt, wobei der Kontaktabschnitt (54) den in der jeweiligen Öffnung (50) angeordneten Halteschenkel (32) kontaktiert und den jeweiligen kontaktierten Halteschenkel (32) unter Bildung eines Spaltes (60) von einem Randabschnitt der Öffnung (50) beabstandet hält.

2. Längseinstellvorrichtung (10) gemäß Anspruch 1, wobei das Anlagemittel (52) einstückig mit der ersten Schiene (12) gebildet ist.

3. Längseinstellvorrichtung (10) gemäß einem der Ansprüche 1 oder 2, wobei das Anlagemittel (52) aus dem Material der ersten Schiene (12) freigeschnitten oder freigestanzt ist.

4. Längseinstellvorrichtung (10) gemäß einem der Ansprüche 1 bis 3, wobei das Anlagemittel (52) in Form einer Lasche ausgestaltet ist.

5. Längseinstellvorrichtung (10) gemäß einem der Ansprüche 1 bis 4, wobei das Anlagemittel (52) aus der ersten Schiene (12) ausgestellt ist.

6. Längseinstellvorrichtung (10) gemäß einem der Ansprüche 1 bis 5, wobei eine Nachgiebigkeit des Anlagemittels (52) in einer Querrichtung (y) höher ist als eine Nachgiebigkeit des Anlagemittels (52) in Längsrichtung (x).

7. Längseinstellvorrichtung (10) gemäß einem der Ansprüche 1 bis 6, wobei eine Steifigkeit des Anlagemittels (52) in Längsrichtung (x) höher ist als eine Steifigkeit des Anlagemittels (52) in Querrichtung (y).

8. Längseinstellvorrichtung (10) gemäß einem der Ansprüche 1 bis 7, wobei die Halterung (30) als ein U-förmiger Haltebügel mit zwei parallelen Halteschenkeln (32) ausgebildet ist.

9. Längseinstellvorrichtung (10) gemäß einem der Ansprüche 1 bis 8, wobei jeweils ein freies Ende der Halteschenkel (32) nach unten gerichtet ist.

10. Längseinstellvorrichtung (10) gemäß einem der Ansprüche 1 bis 9, wobei die Vorsprünge (36) stufenförmig ausgebildet sind.

11. Längseinstellvorrichtung (10) gemäß einem der Ansprüche 1 bis 10, wobei eine Form der jeweiligen Vorsprünge (36) mit seitlichen Öffnungen (50) in einander gegenüber liegenden Seitenwänden (12a) der ersten Sitzschiene (12) korrespondiert.

12. Längseinstellvorrichtung (10) gemäß einem der Ansprüche 1 bis 11, wobei, bis auf den Kontakt des Halteschenkels (32) mit dem Kontaktabschnitt (54) des Anlagemittels (52) in Längsrichtung (x), beiderseits der Halteschenkel (32) ein Spalt (60) vorgesehen ist.

13. Längseinstellvorrichtung (10) gemäß einem der Ansprüche 1 bis 12, wobei, bis auf den Kontakt des Halteschenkels (32) mit dem Kontaktabschnitt (54) des Anlagemittels (52) in Längsrichtung (x), beiderseits der Halteschenkel (32) ein die Vorsprünge (36) umlaufender Spalt (60) vorgesehen ist.

14. Längseinstellvorrichtung (10) gemäß einem der Ansprüche 1 bis 13, wobei die Kontaktabschnitte (54) der beiden Anlagemittel (52) einer jeden Seitenwand (12a) der ersten Schiene (12) aufeinander zu orientiert sind.

15. Fahrzeugsitz (1), insbesondere Kraftfahrzeugsitz, aufweisend ein Sitzteil (2) und eine mit dem Sitzteil (2) verbundene Längseinstellvorrichtung (10) zur motorischen Längseinstellung des Fahrzeugsitzes (1) gemäß einem der vorherstehenden Ansprüche.

## Claims

1. Longitudinal adjusting device (10) for the motorized longitudinal adjustment of a vehicle seat (1), in particular a motor vehicle seat, having a first rail (12), a second rail (14) which is displaceable relative to the first rail (12), wherein an inner channel (16) is formed between the first rail (12) and the second rail (14), a spindle mechanism (20) and a spindle (40) interacting with the spindle mechanism (20) for the longitudinal adjustment, wherein the spindle mechanism (20) is held by a holder (30) for receiving the spindle mechanism (20) in a manner at least partially fixed in the inner channel (16) relative to the first rail (12), and the spindle (40) is fixed relative to the second rail (14), wherein laterally protruding protrusions (36) of the holding limbs (32) of the holder (30), said holding limbs each being arranged in the longitudinal direction (x) upstream and downstream of the spindle mechanism (20), reach through lateral openings (50) of the first rail (12),
**characterized in that**
a respective abutment means (52) with a contact portion (54) is arranged in the region of the lateral openings (50), **in that** the abutment means (52) is configured in such a manner that it projects with its contact portion (54) into a region of the opening (50), in particular projects into the opening (50) or projects over the opening (50), wherein the contact portion (54) makes contact with the holding limb (32) arranged in the respective opening (50) and keeps the respective contacted holding limb (32) at a distance from an edge portion of the opening (50) forming a gap (60).

2. Longitudinal adjusting device (10) according to Claim 1, wherein the abutment means (52) is formed integrally with the first rail (12).

3. Longitudinal adjusting device (10) according to either of Claims 1 and 2, wherein the abutment means (52) is cut free or punched free from the material of the first rail (12).

4. Longitudinal adjusting device (10) according to one of Claims 1 to 3, wherein the abutment means (52) is configured in the form of a tab.

5. Longitudinal adjusting device (10) according to one of Claims 1 to 4, wherein the abutment means (52) is deployed from the first rail (12).

6. Longitudinal adjusting device (10) according to one of Claims 1 to 5, wherein a flexibility of the abutment means (52) in a transverse direction (y) is higher than a flexibility of the abutment means (52) in the longitudinal direction (x).

7. Longitudinal adjusting device (10) according to one of Claims 1 to 6, wherein a rigidity of the abutment means (52) in the longitudinal direction (x) is higher than a rigidity of the abutment means (52) in the transverse direction (y).

8. Longitudinal adjusting device (10) according to one of Claims 1 to 7, wherein the holder (30) is designed as a U-shaped holding clip with two parallel holding limbs (32) .

9. Longitudinal adjusting device (10) according to one of Claims 1 to 8, wherein a respective free end of the holding limbs (32) is directed downward.

10. Longitudinal adjusting device (10) according to one of Claims 1 to 9, wherein the protrusions (36) are step-shaped.

11. Longitudinal adjusting device (10) according to one of Claims 1 to 10, wherein a shape of the respective protrusions (36) corresponds to lateral openings (50) in mutually opposite sidewalls (12a) of the first seat rail (12).

12. Longitudinal adjusting device (10) according to one of Claims 1 to 11, wherein a gap (60) is provided on both sides of the holding limb (32) except for the contact of the holding limb (32) with the contact portion (54) of the abutment means (52) in the longitudinal direction (x).

13. Longitudinal adjusting device (10) according to one of Claims 1 to 12, wherein a gap (60) encircling the protrusions (36) is provided on both sides of the holding limbs (32) except for the contact of the holding limb (32) with the contact portion (54) of the abutment means (52) in the longitudinal direction (x) .

14. Longitudinal adjusting device (10) according to one of Claims 1 to 13, wherein the contact portions (54) of the two abutment means (52) of each sidewall (12a) of the first rail (12) are oriented toward each other.

15. Vehicle seat (1), in particular motor vehicle seat, having a seat part (2) and a longitudinal adjusting device (10) connected to the seat part (2) for the motorized longitudinal adjustment of the vehicle seat (1) according to one of the preceding claims.

## Revendications

1. Dispositif de réglage longitudinal (10) pour effectuer le réglage longitudinal d'un siège de véhicule (1), en particulier d'un siège de véhicule automobile, par moteur, comprenant un premier rail (12), un deuxième rail (14) déplaçable par rapport au premier rail (12), un canal intérieur (16) étant formé entre le premier rail (12) et le deuxième rail (14), une transmission à broche (20) et une broche (40) coopérant avec la transmission à broche (20) pour le réglage longitudinal, la transmission à broche (20) étant retenue de manière fixée au moins partiellement dans le canal intérieur (16) par rapport au premier rail (12) au moyen d'un élément de retenue (30) servant à la réception de la transmission à broche (20), et la broche (40) étant fixée par rapport au deuxième rail (14), des saillies (36) faisant saillie latéralement des branches de retenue (32) de l'élément de retenue (30) disposées respectivement devant et derrière la transmission à broche (20) dans la direction longitudinale (x) venant en prise à travers des ouvertures latérales (50) du premier rail (12),
**caractérisé en ce**
**qu'**un moyen d'appui (52) comprenant une partie de contact (54) est disposé respectivement dans la région des ouvertures latérales (50), **en ce que** le moyen d'appui (52) est configuré de telle sorte qu'il pénètre par sa partie de contact (54) jusque dans une région de l'ouverture (50), en particulier pénètre dans l'ouverture (50) ou dépasse de l'ouverture (50), la partie de contact (54) venant en contact avec la branche de retenue (32) disposée dans l'ouverture (50) respective et retenant la branche de retenue (32) en contact respectivement à distance d'une partie de bord de l'ouverture (50) en formant un interstice (60).

2. Dispositif de réglage longitudinal (10) selon la revendication 1, le moyen d'appui (52) étant formé d'une seule pièce avec le premier rail (12).

3. Dispositif de réglage longitudinal (10) selon l'une des revendications 1 ou 2, le moyen d'appui (52) étant dégagé par découpage ou dégagé par estampage dans le matériau du premier rail (12).

4. Dispositif de réglage longitudinal (10) selon l'une des revendications 1 à 3, le moyen d'appui (52) étant configuré sous la forme d'une languette.

5. Dispositif de réglage longitudinal (10) selon l'une des revendications 1 à 4, le moyen d'appui (52) étant exposé hors du premier rail (12).

6. Dispositif de réglage longitudinal (10) selon l'une des revendications 1 à 5, une flexibilité du moyen d'appui (52) dans une direction transversale (y) étant supérieure à une flexibilité du moyen d'appui (52) dans la direction longitudinale (x).

7. Dispositif de réglage longitudinal (10) selon l'une des revendications 1 à 6, une rigidité du moyen d'appui (52) dans la direction longitudinale (x) étant supérieure à une rigidité du moyen d'appui (52) dans la direction transversale (y).

8. Dispositif de réglage longitudinal (10) selon l'une des revendications 1 à 7, l'élément de retenue (30) étant réalisé sous la forme d'un étrier de retenue en forme de U comprenant deux branches de retenue (32) parallèles.

9. Dispositif de réglage longitudinal (10) selon l'une des revendications 1 à 8, une extrémité libre de la branche de retenue (32) étant orientée respectivement vers le bas.

10. Dispositif de réglage longitudinal (10) selon l'une des revendications 1 à 9, les saillies (36) étant réalisées de manière étagée.

11. Dispositif de réglage longitudinal (10) selon l'une des revendications 1 à 10, une forme des saillies (36) respectives correspondant à des ouvertures latérales (50) dans des parois latérales (12a) en regard l'une de l'autre du premier rail de siège (12) .

12. Dispositif de réglage longitudinal (10) selon l'une des revendications 1 à 11, un interstice (60) étant prévu de part et d'autre des branches de retenue (32) à l'exception du contact de la branche de retenue (32) avec la partie de contact (54) du moyen d'appui (52) dans la direction longitudinale (x).

13. Dispositif de réglage longitudinal (10) selon l'une des revendications 1 à 12, un interstice (60) entourant les saillies (36) étant prévu de part et d'autre des branches de retenue (32) à l'exception du contact de la branche de retenue (32) avec la partie de contact (54) du moyen d'appui (52) dans la direction longitudinale (x).

14. Dispositif de réglage longitudinal (10) selon l'une des revendications 1 à 13, les parties de contact (54) des deux moyens d'appui (52) de chaque paroi latérale (12a) du premier rail (12) étant orientées l'une vers l'autre.

15. Siège de véhicule (1), en particulier siège de véhicule automobile, présentant une partie d'assise (2) et un dispositif de réglage longitudinal (10) relié à la partie d'assise (2) pour le réglage longitudinal du siège de véhicule (1) par moteur selon l'une des revendications précédentes.
